## Europäisches Patentamt
## European Patent Office
## Office européen des brevets

(19)

(11) Veröffentlichungsnummer: **0 024 666**
**B1**

(12) **EUROPÄISCHE PATENTSCHRIFT**

(45) Veröffentlichungstag der Patentschrift:
14.04.82

(21) Anmeldenummer: 80104884.4

(22) Anmeldetag: 16.08.80

(51) Int. Cl.³: **C 09 D 3/74,** C 08 F 212/04,
C 08 F 220/10, C 08 F 222/20,
C 08 F 8/14

(54) Lufttrocknende, fettsäuremodifizierte Lackbindemittel auf der Grundlage von Fumar- bzw. Maleinsäurebisglycidylestercopolymerisaten.

(30) Priorität: 29.08.79 DE 2934950

(43) Veröffentlichungstag der Anmeldung:
11.03.81 Patentblatt 81/10

(45) Bekanntmachung des Hinweises auf die Patenterteilung:
14.04.82 Patentblatt 82/15

(84) Benannte Vertragsstaaten:
AT BE DE FR GB IT NL SE

(56) Entgegenhaltungen:
DE-A1- 2 706 106

(73) Patentinhaber: BAYER AG, Zentralbereich Patente, Marken und Lizenzen, D-5090 Leverkusen 1, Bayerwerk (DE)

(72) Erfinder: Höhlein, Peter, Dr., Windmühlenweg 3 e, D-4152 Kempen 3 (DE)
Erfinder: Traenckner, Hans-Joachim, Dr., Wedelstrasse 46, D-4150 Krefeld 1 (DE)
Erfinder: Fleiter, Lothar, Dr., Bärenstrasse 7, D-4150 Krefeld 1 (DE)
Erfinder: Bottenbruch, Ludwig, Dr., Wöhlerstrasse 5, D-4150 Krefeld 1 (DE)

Lufttrocknende, fettsäuremodifizierte Lackbindemittel auf der Grundlage von Fumar- bzw. Maleinsäurebisglycidylestercopolymerisaten

Die Erfindung betrifft lufttrocknende Lackbindemittel aus Copolymerisaten von Vinylverbindungen, Vinylidenverbindungen und Fumar- bzw. Maleinsäurebisglycidylestern, die vor oder nach der Copolymerisation mit trocknenden Fettsäuren bzw. deren Gemischen verestert werden.

Es ist bekannt, Copolymerisate aus Styrol und Glycidylmethacrylat mit trocknenden Fettsäuren unter Addition der Carboxylgruppen der Fettsäure an die Epoxidgruppen des Copolymerisats umzusetzen und die erhaltenen Umsetzungsprodukte als lufttrocknende Lackbindemittel zu verwenden (vgl. GB-PS 767 476).

Ferner ist es bekannt, Copolymerisate aus Glycidyl-(meth)acrylat und Vinyl- oder Vinylidenmonomeren mit trocknenden Fettsäuren umzusetzen und als lufttrocknende Lackbindemittel einzusetzen. Unter Vinyl- bzw. Vinylidenmonomeren werden Vinyltoluol, (Meth)acrylnitril und (Meth)acrylsäureester verstanden (vgl. GB-PS 793 776).

Ein grosser Nachteil der Bindemittel der britischen Patentschriften liegt in dem Mangel an Glanz der pigmentierten Lacke, der durch ungenügende Pigmentbenetzung verursacht wird.

Um diesen Mangel zu beheben, werden gemäss DE-OS 1 720 697 Copolymerisate aus mindestens einem Vinylmonomeren und mindestens einem Epoxidgruppen-enthaltenden Comonomeren hergestellt, mit trocknenden Fettsäuren verestert und die bei der Veresterung gebildeten Hydroxylgruppen mit einem Dicarbonsäureanhydrid zu Halbestergruppierungen umgesetzt, wobei zur Erzielung eines ausreichenden Effekts Säurezahlen zwischen etwa 20 und etwa 60, bezogen auf das Bindemittel, erforderlich sind.

Wie viele lufttrocknende Lacke neigen die fertigen Lackformulierungen jedoch bei Lagerung in der Dose zu unerwünschter Hautbildung und zu Eindickungen, so dass sie des Zusatzes eines Hautverhinderungsmittels bedürfen. Leider führt der Zusatz eines Hautverhinderungsmittels selbst bei gleichen Trocknungsbedingungen zu starken Trocknungszeitverzögerungen, so dass derartige Bindemittel zur Herstellung lufttrocknender Lacke nicht geeignet sind.

Eine Lösung des vorstehenden Problems wird in der DE-OS 26 47 314 beschrieben, wobei die lufttrocknenden Bindemittel der DE-OS 1 720 697 so modifiziert werden, dass die Trocknungsverzögerungen, welche durch den Zusatz des Hautverhinderungsmittels verursacht werden, durch ein spezielles Gemisch aus natürlichen und isomerisierten, trocknenden Fettsäuren mit nachfolgender Aufsäuerung mit einem speziellen Dicarbonsäureanhydrid kompensiert werden. Darüber hinaus bleibt der Einsatz der Fettsäuregemische auf einen maximalen Anteil von 50 Gew.-% beschränkt, so dass die Einsatzgebiete der langöligen Alkydharze von diesem Bindemitteltyp nicht erfasst werden.

Aufgabe der vorliegenden Erfindung war es nun, luftvernetzende Lackbindemittel herzustellen, die die erwähnten Nachteile im Hinblick auf Trocknungsverzögerung, Glanzgebung, der Einschränkung auf spezielle Fettsäuregemische und die Beschränkung auf den mittelöligen Bereich vermeiden.

Gegenstand der Erfindung sind somit lufttrocknende Lackbindemittel mit mittleren Molekulargewichten $\bar{M}_n$ von 1000 bis 20 000 und Säurezahlen SZ von 3 bis 30 mg KOH/g Substanz von Copolymerisaten aus copolymerisierten Einheiten von

5,0 bis 55,0 Gew.-%, mindestens eines Glycidylesters einer ungesättigten Carbonsäure und

95,0 bis 45,0 Gew.-%, mindestens eines Vinyl- oder Vinylidenmonomeren oder deren Mischungen,

die, bezogen auf Copolymerisat und trocknende Fettsäure, mit 18 bis 72 Gew.-%, mindestens einer trocknenden Fettsäure bis zur Säurezahl 3–30 mg KOH/g Substanz verestert worden sind und anschliessend, bezogen auf Copolymerisat und trocknende Fettsäure und Dicarbonsäureanhydrid, mit

0 bis 3 Gew.-%, mindestens eines Dicarbonsäureanhydrids

umgesetzt worden sind, dadurch gekennzeichnet, dass der Glycidylester der ungesättigten Carbonsäure, Fumar- oder Maleinsäurebisglycidylester oder eine Mischung dieser Bisglycidylester ist.

Der Fumar- bzw. Maleinsäurebisglycidylester ist aus der Literatur bekannt (vgl. DE-AS 1 030 325, GB-PS 729 883).

Als Vinyl- bzw. Vinylidenmonomere seien beispielhaft genannt:
Styrol, $\alpha$-Methylstyrol, o- bzw. p-Chlorstyrol, o-, m- oder p-Methylstyrol, p-tert.-Butylstyrol und gegebenenfalls Mischungen derselben, Acryl- und Methacrylsäurealkylester mit 1 bis 8 C-Atomen in der Alkoholkomponente, beispielsweise Ethylacrylat, Methylacrylat, n- bzw. iso-Propylacrylat, n-Butylacrylat, 2-Ethylhexylacrylat, 2-Ethylhexylmethacrylat, Isooctylacrylat, tert.-Butylacrylat, Methylmethacrylat, Ethylmethacrylat, n- bzw. iso-Propylmethacrylat, Butylmethacrylate, Isooctylmethacrylat und gegebenenfalls Mischungen derselben; Hydroxyalkyl(meth)acrylate mit 2-4 C-Atomen in der Alkylgruppe, z.B. 2-Hydroxyethyl(meth-)acrylat, 2-Hydroxypropyl-(meth-)acrylat, 4-Hydroxybutyl(meth-)acrylat; Trimethylolpropanmono(meth-)acrylat, Pentaerythritmono(meth)-acrylat oder deren Mischungen; Diester der Fumarsäure, Itaconsäure, Maleinsäure, mit 4-8 Kohlenstoffatomen in der Alkoholkomponente; Acrylnitril, (Meth)acrylsäureamid, Vinylester von Alkanmonocarbonsäuren mit 2–5 Kohlenstoffatomen wie Vinylacetat oder Vinylpropionat oder Mischungen der vorgenannten Monomeren, N-Methoxymethyl(meth)acrylsäureamid.

Bevorzugte Monomere sind Styrol und (Meth)Acrylsäurealkylester mit 1–8 C-Atomen in der Alkoholkomponente und deren Mischungen.

Die Herstellung des Copolymerisatharzes kann durch Copolymerisation der Bestandteile nach üblichen Verfahren erfolgen, wobei der radikalischen Polymerisation in der Schmelze bzw. in Lösung der Vorzug gegeben wird. Die Polymerisation kann bei Temperaturen von 70–160°C vorzugsweise 100–150°C, durchgeführt werden.

Die Monomeren werden im wesentlichen in den gleichen Verhältnissen, wie sie zur Polymerisation eingesetzt sind, in das Copolymerisatharz eingebaut, wobei die einpolymerisierten Einheiten im wesentlichen statistisch verteilt sind.

Bevorzugte Initiatoren zur Durchführung der radikalischen Polymerisation sind z.B. symmetrische aliphatische Azoverbindungen wie Azo-bisisobuttersäurenitril, Azo-bis-2-methyl-valeronitril, 1,1′-Azo-bis-1-cyclo-hexannitril und 2,2′-Azo-bis-isobuttersäurealkylester; symmetrische Diacylperoxide, wie z.B. Acetyl-, Propionyl- oder Butyrylperoxid, Brom-, Nitro-, Methyl- oder Methoxygruppen substituierte Benzoylperoxide sowie Lauroylperoxid; symmetrische Peroxydicarbonate, wie z.B. Diethyl-, Diisopropyl-, Dicyclohexyl-, sowie Dibenzylperoxidicarbonat; tert.-Butylperoctoat oder tert.-Butylphenylperacetat sowie Peroxidcarbonate wie tert.-Butyl-N-(phenylperoxi)-carbamat oder tert.-Butyl-N-(2,3-dichloroder -4-chlorphenyl-peroxid)carbamat. Weitere bevorzugte Peroxide sind: tert.-Butylhydroperoxid, Di-tert.-butylperoxid, Cumolhydroperoxid, Di-cumolperoxid und tert.-Butylperpivalat.

Die Initiatoren können in Mengen von 0,2 bis 15 Gew.-%, bezogen auf Gesamtmonomere, eingesetzt werden. Ebenfalls können übliche Regler in Mengen von 0,1 bis 10 Gew.-%, bezogen auf Gesamtmonomere, bei der Polymerisation eingesetzt werden.

Wird die Lösung polymerisiert, so können inerte Lösungsmittel, wie z.B. Ethanol, Propanol, Isopropanol, N- oder Isobutanol, Methylethylketon, Toluol, Xylol, Essigsäurebutylester, Butylglykol usw. verwendet werden.

Die Copolymerisate können im Anschluss an ihre Herstellung nach einer evtl. vorgenommenen Modifizierung bei Temperaturen von 140–200°C von flüchtigen Bestandteilen befreit werden. Dies kann z.B. entweder unter Normaldruck in Schlangenrohrverdampfern durch Einblasen eines Inertgases, wie Stickstoff oder Wasserstoff, in Mengen von 0,1–1 m³ auf 1 kg Harzschmelze oder im Vakuum in Ausdampfapparaturen, wie Fallfilmverdampfern, Dünnschichtverdampfern, Schneckenverdampfern, Entspannungsverdampfern oder Sprühverdampfern, erfolgen.

Die Addition der trocknenden Fettsäure an die Epoxidgruppen-haltigen Mischpolymerisate erfolgt, bevorzugt in Abwesenheit von Katalysatoren, bei Temperaturen von 60–200°C, vorzugsweise bei 100–170°C, und wird bis zur gewünschten Säurezahl im beanspruchten Bereich durchgeführt.

Als Verfahrensvariante kann die Umsetzung der Fettsäure mit dem Glycidylgruppen-haltigen Monomeren vor der eigentlichen Mischpolymerisation als eigenständiger Reaktionsschritt oder im Verlaufe der Mischpolymersation im Einstufenprozess erfolgen. Das bevorzugte Verfahren sieht die Addition der Fettsäure an die Epoxidgruppe nach der Mischpolymerisation vor.

Die trocknende Fettsäure kann in Mengen von 18–72, vorzugsweise 25–65 Gew.-%, bezogen auf das Festharz (= Copolymerisat + Fettsäure), eingesetzt werden.

Nach der im Festharz gewünschten Fettsäuremenge richtet sich auch die einzupolymerisierende Menge des expoxidgruppenhaltigen Comonomeren, wobei dieses zweckmässigerweise in einer der Fettsäure äquivalenten Menge eingebaut wird.

Für das Verfahren geeignete natürliche trocknende Fettsäuren sind z.B.: Leinölfettsäure, Sojaölfettsäure, Baumwollsaatölfettsäure, Safloröl-fettsäure, Tallölfettsäure, Sonnenblumenfettsäure, Erdnussölfettsäure in ihrer natürlichen Zusammensetzung, d.h. diese natürlichen, trocknenden Fettsäuren stellen Gemische von gesättigten, einfach und/oder mehrfach ungesättigten Fettsäuren mit trocknenden Eigenschaften dar, wobei die mehrfach ungesättigten Fettsäuren im wesentlichen isolierte Doppelbindungen besitzen. Beispielsweise haben die Fettsäuren der vorstehend genannten Öle etwa die nachstehende Zusammensetzung in Gew.-%:

| | | Leinöl | Sojaöl | Sonnenblumenöl | Baumwollsaatöl | Erdnussöl | Tallöl | Safloröl |
|---|---|---|---|---|---|---|---|---|
| Myristinsäure | $(C_{14})$ | 0,2 | – | – | 3,3 | 0,5 | – | 0,1 |
| Palmitinsäure | $(C_{16})$ | 5,6 | 6,5 | 3,5 | 19,9 | 7,8 | 4,6 | 4,5 |
| Stearinsäure | $(C_{18})$ | 3,5 | 4,5 | 2,9 | 1,3 | 3,1 | 4,6 | 2,0 |
| Arachinsäure | $(C_{20})$ | 0,6 | 0,7 | 0,6 | 0,6 | 2,4 | – | 0,4 |
| Behensäure | $(C_{22})$ | – | – | – | – | 3,1 | – | 0,4 |
| Lignocerinsäure | $(C_{24})$ | 0,1 | – | 0,4 | – | 1,1 | – | – |
| Ölsäure | $(C_{18})$ | 21,0 | 33,5 | 34,1 | 29,6 | 56,0 | 30 | 20 |
| Linolsäure | $(C_{18})$ | 24,0 | 52,5 | 58,5 | 45,3 | 26,0 | 24 | 70 |
| Linolensäure | $(C_{18})$ | 45,0 | 2,3 | – | – | – | 8 | 3 |

Die isomerisierten, trocknenden Fettsäuren enthalten 30–75 Gew.-% an konjugierten Fettsäuren und können durch Isomerisierung der natürlichen, trocknenden Fettsäuren erhalten werden. Konjugierte Fettsäuren sind $C_{18}$-Fettsäuren mit mindestens zwei konjugierten Doppelbindungen, beispielsweise seien genannt:
9.11-Linolsäure, 10.12-Linolsäure, 8.10-Octadecadiensäure, Eläostearinsäure (= 9.11.13-Octadecatriensäure), Pseudoeläostearinsäure (= 10.12.14-Octadecatriensäure), Parinarsäure (= 9.11.13.15-Octadecatetraensäure), Licansäure (= 4-Keto- 9.11.13-Octadecatriensäure) und die Stereoisomeren der vorgenannten Säuren, vorzugsweise 9.11-Linolsäure und Eläostearinsäure und deren Stereoisomere.

Die Isomerisierung der natürlichen, trocknenden Fettsäuren erfolgt nach bekannten Verfahren und ist beispielsweise beschrieben in Ullmanns Enzyklopädie der technischen Chemie, (1956), Band 7, Seite 538–539.

Die aufgeführten Säuren sind beispielsweise in Ullmanns Enzyklopädie der technischen Chemie, (1956), Band 7, Seite 468–486, beschrieben. S. Beilsteins Handbuch der organischen Chemie (1961), 4. Auflage, Band 2, 3. Ergänzungswerk, Seite 1476–1520.

Die im Hinblick auf die Glanzgebung evtl. notwendig werdende Addition von Dicarbonsäureanhydriden an die Hydroxylgruppen der so erhaltenen, fettsäurehaltigen Mischpolymerisate unter Halbesterbildung erfolgt bei Temperaturen von etwa 50–180°C, vorzugsweise bei 80–150°C. Dabei wird das Dicarbonsäureanhydrid in Mengen von bis zu 3 Gew.-%, vorzugsweise bis zu 2 Gew.-%, bezogen auf Copolymerisat + trocknende Fettsäuren + Dicarbonsäureanhydrid, eingesetzt.

Geeignete Dicarbonsäureanhydrid sind z.B.: Bernsteinsäureanhydrid, Maleinsäureanhydrid, Phthalsäureanhydrid, Tetrahydrophthalsäureanhydrid, Hexahydrophthalsäureanhydrid, Methylhexahydrophthalsäureanhydrid, Endomethylentetrahydrophthalsäureanhydrid, halogenierte Phthalsäureanhydride wie Tetrachlorphthalsäureanhydrid, Tetrabromphthalsäureanhydrid; 1,4,5,6,7,7-Hexachlorbicyclo(2,2,1)-hepten-5-dicarbonsäure-(2,3)-anhydrid, Diglykolsäureanhydrid. Vorzugsweise werden verwendet: Maleinsäureanhydrid, Phthalsäureanhydrid, Tetrahydrophthalsäureanhydrid und Tetrachlorphthalsäureanhydrid.

Die erfindungsgemässen Bindemittel zeichnen sich durch hervorragende Pigmentaufnahme und -benetzung, geringe Vergilbung, schnelle Durchtrocknung sowie gute lacktechnische Verarbeitbarkeit aus und ergeben ausgehärtete Filme mit Hochglanz, guter Elastizität und Härte.

Der entscheidende Vorteil gegenüber dem Stand der Technik liegt darin, dass die vorgenannten Eigenschaften ohne Einschränkungen auf spezielle Fettsäuregemische erreicht werden kann, ferner kann im Vergleich zu Monoglycidylestern mit geringeren Mengen an Epoxidkomponente im langöligen Bereich gearbeitet werden.

Die erfindungsgemässen Bindemittel werden bekannterweise in organischen Lösungsmitteln gelöst, z.B. Xylol, Aromatengemische, Ethylglykolacetat, Lackbenzin und gegebenenfalls als Klarlacke, vorzugsweise jedoch pigmentiert mit gebräuchlichen Pigmenten, mit Hilfsstoffen wie Verlaufsmitteln, Sikkativen usw., in üblichen Mengen verarbeitet.

Als Hautverhinderungsmittel können Aldoxime oder Ketoxime, beispielsweise Butanonoxim, in Mengen von 0,1–3,0 Gew.-%, bezogen auf festes Bindemittel, eingesetzt werden.

Die erfindungsgemässen, neuartigen Bindemittel können alleinige Bindemittel eines Lacksystems sein; sie können jedoch, wie in der Lackchemie üblich, selbstverständlich auch mit weiteren Harzen zur Modifizierung von Eigenschaften kombiniert werden.

Den erfindungsgemässen Bindemitteln können zur Variation der Filmeigenschaften – und das ist ein weiterer besonderer Vorteil – auch Melaminharze zugesetzt werden, die über gegebenenfalls vorhandene Hydroxylgruppen eine zusätzliche Vernetzung bewirken, höhere Härte und Widerstandsfähigkeit sowie raschere Montagefertigkeit der frischen Lackierungen bringen.

Die Herstellung der Lackfilme kann durch übliche Methoden, wie Streichen, Spritzen, Tauchen, Rakeln usw., auf geeignete Unterlagen, z.B. aus Metall, Holz, Papier, Glas, Keramik, Stein, Beton, Kunststoff usw., erfolgen. Die Trocknung erfolgt im allgemeinen bei 15–30°C. Es können jedoch auch niedrigere oder höhere Trocknungstemperaturen angewandt werden.

Die in den Beispielen angegebenen %-Gehalte und -Teile beziehen sich auf das Gewicht, sofern nicht anders vermerkt. Die Säurezahlen SZ werden gemäss DIN 53402 und die OH-Zahlen gemäss DIN 53240 ermittelt und in mg KOH/g Substanz ausgedrückt. Die Molgewichte werden osmometrisch in Tetrahydrofuran bestimmt.

Beispiel 1

a) Nach üblichen Verfahren wird durch Lösungspolymerisation aus 241,5 Tln. Styrol, 135,0 Tln. Fumarsäurebisglycidylester, 124,7 Tln. Methylmethacrylat, 9,0 Tln. Butylacrylat, 3,6 Tln. Dodecylmercaptan, 9,0 Tln. tert.-Butylperoctoat und 477,7 Tln. Xylol bei 110°C ein Copolymerisatharz hergestellt. Die Copolymerisatlösung weist einen Feststoffgehalt von 50,0 Gew.-% auf.

b) Für die Veresterung mit isomerisierten, trocknenden Fettsäuren wird ein Gemisch aus 31% einfach ungesättigten $C_{18}$-Fettsäuren (im wesentlichen Ölsäure), 10% dreifach ungesättigter $C_{18}$-Fettsäuren (im wesentlichen Linolen- und Eläostearinsäure) und 51% zweifach ungesättigter $C_{18}$-Fettsäure (im wesentlichen 9.12- und 9.11-Linolsäure), wobei ca. 45% der zwei- und dreifach ungesättigten Fettsäuren konjugierte Doppelbindungen enthalten, eingesetzt. Ferner enthält das Gemisch noch ca. 5% Palmitinsäure, 2% Myristinsäure und 1% Stearinsäure.

264,5 Tle. der unter a) beschriebenen 50%igen Copolymerisatlösung werden mit 81,6 Tln. des vorstehend definierten Fettsäuregemisches bei 140°C verestert, bis eine Säurezahl, bezogen auf lösungsmittelfreies Veresterungsprodukt, von 8,5 erreicht ist. Der Feststoffgehalt der Lösung beträgt 60,1%; der Fettsäureanteil ca. 38%.

c) Zu 272,7 Tln. der nach b. erhaltenen 60,1%igen Lösung des Veresterungsproduktes werden 1,96 Tle. Tetrahydrophthalsäureanhydrid zugesetzt; das entspricht, bezogen auf Festsubstanz (= Copolymerisat + Fettsäuren + Dicarbonsäureanhydrid), ca. 1,2%. Das Gemisch wird auf 120°C erhitzt, bis der Festgehalt von 59,4% und eine Viskosität von 24 833 mPa.s bei 20°C sowie eine Säurezahl, bezogen auf Lösungsmittelfreies Halbesterprodukt, von 11,4 und eine Hydroxylzahl von 62 erreicht sind. Das durchschnittliche Molgewicht (Zahlenmittel $\overline{M}n$, osmotrisch bestimmt in Tetrahydrofuran) beträgt ca. 9500. Lackrezeptur: Ein Weisslack, hergestellt aus:

| Tln. | |
|---|---|
| 168 | Bindemittellösung gemäss Beispiel 1c (59,4%ig) |
| 65 | Titandioxidpigment (Rutil-Typ) |
| 121 | Xylol/Gemisch aus 79,6% $C_{10}$-Aromaten; 6,3% $C_{11}$-Alkylbenzolen; 1,9% $C_{12}$-Alkylbenzolen; 4,2% Naphthalin; 6,2% $C_9$-Aromaten und 1,8% Aliphaten (= Solvesso 150®, Handelsprodukt der Esso). Ethylglykolacetat Gewichtsverhältnis = 1:1:1 |
| 2,5 | Ca-Octoat-Lösung (4% Metallgehalt) |
| 3 | Ethylglykolacetat |
| 1,5 | Hautverhinderungsmittel (ca. 55%ige Lösung von Butanonoxim in Testbenzin) |
| 1,2 | Siliconöl-Lösung (1%ig in Xylol) |
| 1,7 | Cobalt-Octoat-Lösung (6% Metallgehalt) |
| 3,3 | Zirkonium-Lösung (6% Metallgehalt) |

zeigt die in der Tabelle unter Beispiel 1 angegebenen Ergebnisse.

Vergleich 1

Dieser Vergleichsversuch (siehe Tabelle dieser Anmeldung) zeigt, dass Weisslacke aus Bindemitteln gemäss DE-OS 1 720 697, Anwendungsbeispiel 1 auch nach Zusatz üblicher Hautverhinderungsmittel deutlich langsamer klebfrei trocknen und vorzeitig gelieren, verglichen mit Weisslacken hergestellt mit erfindungsgemässen Bindemitteln.

Die ohne Zusatz eines Hautverhinderungsmittels mit Bindemitteln gemäss DE-OS 1 720 697 hergestellten Weisslacke besitzen keine Lagerstabilität.

Gemäss Beispiel 1 der DE-OS 1 720 697 wird eine Lösung von 120 g Styrol, 78 g Methylmethacrylat und 102 g Glycidylmethacrylat in ca. 500 g Xylol nach Zugabe von 2,8 g Azodiisobutyronitril als Katalysator und 0,8 g Dodecylmercaptan als Regler 25 Stunden unter Stickstoff auf 80°C erhitzt. Danach beträgt der Umsatz 100% und man erhält eine klare farblose Polymerisatlösung mit einer Säurezahl von 1 und einer Auslaufviskosität im DIN-Becher (4 mm Düse) von 28 s bei 28°C. Diese Lösung wird nach Zugabe von 194 g einer technischen Linolsäure mit einer Säurezahl von 200 unter Stickstoff 8 Stunden bei 140°C gerührt. Danach beträgt die Säurezahl 5; die Addition der Fettsäure an das Copolymerisat ist also praktisch vollständig.

Die klare, hellgelbe Reaktionslösung wird sodann mit 25 g Phthalsäureanhydrid unter Stickstoff 75 min bei 140°C gerührt, wonach eine Lösung von ca. 50 Gew.-% Feststoffgehalt mit einer Säurezahl von 16, entsprechend einer Säurezahl von ca. 32, bezogen auf festes Bindemittel, erhalten wird.

Beispiel 2

Ein lufttrocknendes Copolymerisatharz wird hergestellt durch eine Lösungspolymerisation folgender Bestandteile nach üblichen Verfahren: 241,5 Tle. Styrol, 135,0 Tle. Maleinsäurebisglycidylester, 124,7 Tle. Methylmethacrylat, 9,0 Tle. Butylacrylat, 3,6 Tle. Dodecylmercaptan, 9,0 Tle. Tert.-Butylperoctoat und 477,2 Tle. Xylol. Die Reaktionstemperatur beträgt 110°C, der Feststoffgehalt nach dem Ende der Reaktion 49,4% und die Viskosität 549 mPa.s.

Die Veresterung mit dem isomerisierten Fettsäuregemisch gemäss Beispiel 1b wird im Mengenverhältnis 1150 Tle. Copolymerisat und 350 Tle. des oben beschriebenen Fettsäuregemisches bei 140°C durchgeführt. Es resultiert eine Mischung mit einer SZ von 7 und einem Feststoffgehalt von 67,4% und einer Viskosität von 4818 mPa.s bei 20°C. Der Fettsäureanteil beträgt 38,1%.

Durch Umsetzung von 1328 Tl. der fettsäuremodifizierten Mischung (Festgehalt 67,4%) mit 10,1 Tl. Tetrahydrophthalsäureanhydrid, entsprechend ca. 1.1%, bezogen auf Festsubstanz, bei 120°C wird ein Copolymerisatharz mit einem Feststoffgehalt von 67,6% und einer Viskosität von 5918 mPa.s bei 20°C erhalten. Die Säurezahl beträgt 13,8, bezogen auf lösungsmittelfreies Halbesterprodukt, und es wird eine OH-Zahl von 69 erreicht. Das durchschnittliche Molgewicht (Zahlenmittel $\overline{M}n$) beträgt ca. 7800.

Ein nach der oben angegebenen Lackrezeptur hergestellter Weisslack führte zu den in der Tabelle angegebenen lacktechnischen Prüfergebnissen.

Beispiel 3

Nach den gleichen Verfahren wie in Beispiel 1 wird aus 62,35 Tln. Methylmethacrylat, 120,75 Tln. Styrol, 67,5 Tln. Fumarsäurebisglycidylester, 4,5 Tln. Butylacrylat, 1,8 Tln. Dodecylmercaptan, 4,5 Tln. tert.-Butylperoctoat und 238,6 Tln. Xylol bei 110°C ein Copolymerisatharz hergestellt, das nach dem Ende der Reaktion einen Feststoffanteil von 50,4% aufweist.

Für die Veresterung mit trocknenden Fettsäuren werden natürlich trocknende Fettsäuren eingesetzt und zwar ein Gemisch aus 75% zweifach ungesättigten $C_{18}$-Fettsäuren (im wesentlichen Linolsäure), 13% einfach ungesättigten $C_{18}$-Fettsäuren (im wesentlichen Ölsäure), 0,5% dreifach ungesättigten $C_{18}$-Fettsäuren (im wesentlichen Linolensäure). Darüber hinaus sind im Gemisch noch ca. 1% Laurinsäure, 0,5% Myristinsäure, 7,5% Palmitinsäure und 2,5% Stearinsäure enthalten.

1322 Tl. der 50,4%igen Copolymerisatlösung werden mit 390 Tl. des vorstehend definierten Fettsäuregemisches bei 140°C verestert, bis eine Säurezahl, bezogen auf das lösungsmittelfreie Veresterungsprodukt, von 10,7 erreicht ist. Der Feststoffgehalt der Lösung beträgt 61,2%, die Viskosität 20 354 mPa.s bei 20°C. Das durchschnittliche Molgewicht $\overline{M}n$ beträgt ca. 7300 und der Fettsäureanteil 36,9%.

Das nach der im Beispiel 1 angegebenen Lackrezeptur geprüfte Bindemittel zeigt die in der Tabelle angegebenen Ergebnisse.

Beispiel 4

Nach dem gleichen Verfahren wie im Beispiel 1 werden aus 311,75 Tln. Methylmethacrylat, 603,75 Tln. Styrol, 337,5 Tln. Maleinsäurebisglycidylester, 22,5 Tln. Butylacrylat, 9,0 Tln. Dodecylmercaptan, 22,5 Tln. tert.-Butylperoctoat und 1193 Tln. Xylol bei 110°C ein Copolymerisatharz hergestellt, das nach dem Ende der Reaktion einen Feststoffanteil von 48,7% aufweist.

Für die Veresterung mit trocknenden Fettsäuren wird das gleiche Gemisch wie in Beispiel 3 eingesetzt. 661 Tl. der 48,7%igen Copolymerisatlösung werden mit 190 Tl. des beschriebenen Fettsäuregemisches bei 140°C verestert, bis eine Säurezahl, bezogen auf das lösungsmittelfreie Veresterungsprodukt, von 11,8 erreicht ist. Der Feststoffgehalt der Lösung beträgt 59,6%, die Viskosität 3627 mPa.s bei 20°C. Das durchschnittliche Molgewicht $\overline{M}n$ beträgt ca. 6900 und der Fettsäureanteil ca. 37,1%. Die anwendungstechnischen Ergebnisse sind aus der Tabelle ersichtlich.

Beispiel 5

1205 Tle. Styrol, 2600 Tle. Fumarsäurebisglycidylester, 1247 Tle. Methylmethacrylat, 36 Tle. Dodecylmercaptan, 90 Tle. tert.-Butylperoctoat und 4772 Tle. Xylol werden bei 110°C nach den oben beschriebenen Verfahren wie in Beispiel 1 zu einem Copolymerisat mit einem Feststoffgehalt von 50,7% umgesetzt.

Für die Veresterung wird das Fettsäuregemisch des Beispiels 1 verwendet. Aus 1323 Tln. der 50,7%igen Copolymerisatlösung und 1593 Tln. des oben angegebenen Fettsäuregemisches wird bei 140°C ein Copolymerisatharz hergestellt, dessen Feststoffgehalt 77,3% und Viskosität ca. 56 300 mPa.s betragen. Der Fettsäureanteil liegt bei ca. 70,4 Gew.-%. Die Säurezahl beträgt 11 und das Molgewicht $\overline{M}n$ ca. 7500.

Das nach der im Beispiel 1 angegebenen Lackrezeptur geprüfte Bindemittel zeigt die in der Tabelle angegebenen Ergebnisse.

Beispiel 6

Nach dem gleichen Verfahren wie in Beispiel 1 werden aus 187,05 Tln. Methylmethacrylat, 362,25 Tln. Styrol, 202,5 Tln. Fumarsäurebisglycidylester, 13,5 Tln. Butylacrylat, 5,4 Tln. Dodecylmercaptan, 13,5 Tln. tert.-Butylperoctoat und 715,8 Tln. Xylol bei 110°C ein Copolymerisatharz hergestellt, das nach dem Ende der Reaktion einen Feststoffanteil von 50,9% aufweist.

Für die Veresterung mit trocknenden Fettsäuren wird Sojaölfettsäure eingesetzt.

991,5 Tle. der 50,9%igen Copolymerisatlösung werden mit 297,5 Tln. des vorstehend definierten Fettsäuregemisches bei 140°C verestert, bis eine Säurezahl, bezogen auf das lösungsmittelfreie Veresterungsprodukt, von ca. 8,6 erreicht ist. Der Feststoffgehalt der Lösung beträgt 60,8%, die Viskosität ca. 16 430 mPa.s bei 20°C. Das durchschnittliche Molgewicht $\overline{M}n$ beträgt ca. 8440 und der Fettsäureanteil ca. 37,1%.

Das nach der im Beispiel 1 angegebenen Lackrezeptur geprüfte Bindemittel zeigt die in der Tabelle angegebenen Ergebnisse.

Erläuterungen zur Tabelle
Schichtdicke der getrockneten Filme 50 µm
Substrat: Glasplatten bzw. Karosseriebleche

Die Bestimmung der Pigmentbenetzung erfolgt mit pigmentierten Polymerisatlösungen (50 Gew.-% Titandioxidpigment, bezogen auf Festharz), die auf eine Auslaufviskosität von 20 sec. im DIN-Becher 4 bei 20°C eingestellt wurden. Die so verdünnten Lacklösungen werden auf Glasplatten aufgegossen und bei Raumtemperatur aufrechtstehend getrocknet. Nach dem Trocknen wird die Homogenität des Films beurteilt, wobei sehr gute Pigmentbenetzung völlige Homogenität und sehr schlechte Pigmentbenetzung Flokkulation des Films (Inhomogenität) bedeuten.

Staubtrocken heisst: Auf waagerecht gelegte Unterlage wird von 20 cm Höhe ein Wattebausch von 2 bis 3 cm Durchmesser fallen gelassen; man wartet etwa 10 sec. und versucht, durch Blasen den Wattebausch zu entfernen. Die Schicht ist staubtrocken, wenn keine Haare mehr an der Oberfläche kleben.

Klebfrei bedeutet: Die Unterlage wird mit der Lackschicht nach oben auf eine tarierte Waage gelegt, die mit einem Gegengewicht von 1 kg belastet wird. Auf die Lackschicht wird ein kleiner, fettfreier Wattebausch von 2 bis 3 cm Durchmesser gelegt und auf diesen eine kleine Metallscheibe mit einem Durchmesser von 2 cm. Jetzt wird mit dem Finger auf die Scheibe gedrückt, bis die Waage im Gleichgewicht steht, und so wird die Waage während 10 sec. im Gleichgewicht gehalten. Nach Entfernen der Metallscheibe wird versucht, den Wattebausch durch sanftes Blasen zu entfernen. Die Lackschicht ist klebfrei, wenn der Bausch nicht mehr an der Lackschicht klebt und auch keine Haare hinterbleiben.

Die angegebenen Pendelhärten wurden nach König in sec. nach 16 Stunden Lufttrocknung bestimmt. Vgl. W. König, Farbe und Lack, 59 (1953), Seite 435. Je geringer der Messwert, desto weicher der Film.

Die Messung der Erichsen-Tiefung (Dehnbarkeit des Films) erfolgte gemäss DIN 53 156 in mm.

Je höher der Messwert, desto dehnbarer der Film.

Die Glanzmessung nach Gardner erfolgt gemäss ASTM D-523-T.

Tabelle

| Eigenschaften von Weisslacken 50 μm Trockenfilmdicke | Beispiel 1 | Vergleich 1 | Beispiel 2 | Beispiel 3 | Beispiel 4 | Beispiel 5 | Beispiel 6 |
|---|---|---|---|---|---|---|---|
| Pigmentbenetzung[1] | 0 | 0 | 0 | 0 | 0 | 0 | 0 |
| staubtrocken (Min.) | 30 | 40 | 30 | 25 | 30 | 30 | 20 |
| klebfrei (Std.) | 2,5 | 10 | 3 | 2,5 | 3,5 | 3 | 2,5 |
| Filmeigenschaften nach 16 h Trocknung bei 20°C | | | | | | | |
| Pendelhärte (sec) | 23 | Lack geliert nach einem Tag | 14 | 34 | 22 | 26 | 32 |
| Fingernagelhärte[1] | 2 | | 2 | 2 | 2 | 2 | 2 |
| Abklebbarkeit[1] | 0 | | 3 | 0 | 3 | 0 | 0 |
| Superbenzinfestigkeit[1] | 0 | | 2 | 0 | 2 | 0 | 0 |
| Weisston[1] | 0 | | 0 | 0 | 0 | 0 | 0 |
| Erichsen-Tiefung (mm) | | | | | | | |
| nach 3 Tagen 20°C | 7,6 | | 9,0 | 8,4 | 8,7 | 7,9 | 8,5 |
| nach 10 Tagen 70°C | 8,3 | | 8,5 | 7,9 | 8,4 | 7,3 | 8,0 |
| Glanz nach Gardner (20°C) | | | | | | | |
| nach 3 Tagen 20°C | 90 | | 90 | 92 | 89 | 88 | 91 |
| nach 10 Tagen 70°C | 85 | | 63 | 87 | 65 | 78 | 84 |

[1]Allgemeine Bewertungsskala: 0 = ausgezeichnet, 1 = sehr gut, 2 = gut, 3 = befriedigend, 4 = ausreichend, 5 = ungenügend.

**Patentanspruch für die Vertragsstaaten BE, DE, FR, GB, IT, NL, SE**

Lufttrocknende Lackbindemittel mit mittleren Molekulargewichten $\overline{M}n$ von 1000 bis 20 000 und Säurezahlen SZ von 3 bis 30 mg KOH/g Substanz von Copolymerisaten aus copolymerisierten Einheiten von

5,0 bis 55,0 Gew.-% mindestens eines Glycidylesters aus ungesättigter Carbonsäure und

95,0 bis 45,0 Gew.-% mindestens eines Vinyl- oder Vinylidenmonomeren oder deren Mischungen,

die, bezogen auf Copolymerisat + trocknende Fettsäure, mit 18 bis 72 Gew.-% mindestens einer trocknenden Fettsäure bis zur Säurezahl 3–30 mg KOH/g Substanz verestert worden sind und anschliessend, bezogen auf Copolymerisat und trocknende Fettsäure und Dicarbonsäureanhydrid, mit

0 bis 3 Gew.-% mindestens eines Dicarbonsäureanhydrids umgesetzt sind,

dadurch gekennzeichnet, dass der Glycidylester der ungesättigten Carbonsäure, Fumar- oder Maleinsäurebisglycidylester oder eine Mischung dieser Bisglycidylester ist.

**Patentanspruch für den Vertragsstaat AT**

Verfahren zur Herstellung lufttrocknender Lackbindemittel mit mittleren Molekulargewichten $\overline{M}n$ von 1000 bis 20 000 und Säurezahlen SZ von 3 bis 30 mg KOH/g Substanz durch Copolymerisation von

5,0 bis 55,0 Gew.-% mindestens eines Glycidylesters aus ungesättigter Carbonsäure und

95,0 bis 45,0 Gew.-% mindestens eines Vinyl- oder Vinylidenmonomeren oder deren Mischungen,

und Veresterung des Copolymerisats, bezogen auf Copolymerisat plus trocknende Fettsäure, mit 18 bis 72 Gew.-% mindestens einer trocknenden Fettsäure bis zur Säurezahl 3–30 mg KOH/g Substanz und anschliessende Umsetzung, bezogen auf Copolymerisat und trocknende Fettsäure und Dicarbonsäureanhydrid, mit

0 bis 3 Gew.-% mindestens eines Dicarbonsäureanhydrids,

dadurch gekennzeichnet, dass der Glycidylester der ungesättigten Carbonsäure, Fumar- oder Maleinsäurebisglycidylester oder eine Mischung dieser Bisglycidylester ist.

## Claim
### for the contracting states: BE, DE, FR, GB, IT, NL, SE

Air-drying lacquer binders having average molecular weights ($\overline{M}n$) of from 1,000 to 20,000 and acid numbers (AN) of from 3 to 30 mg of KOH/g of substance based on copolymers of copolymerised units of

from 5.0 to 55.0%, by weight, of at least one glycidyl ester of an unsaturated carboxylic acid and from 95.0 to 45.0%, by weight, of at least one vinyl or vinylidene monomer or mixtures thereof,

which have been esterified to an acid number of from 3 to 30 mg of KOH/g of substance using from 18 to 72%, by weight, based on copolymer and drying fatty acid, of at least one drying fatty acid and then reacted with from 0 to 3%, by weight, based on copolymer and drying fatty acid and dicarboxylic acid anhydride, of at least one dicarboxylic acid anhydride, characterised in that the glycidyl ester of the unsaturated carboxylic acid is fumaric or maleic acid bis-glycidyl ester or a mixture of these bis-glycidyl esters.

## Claim
### for the contracting state: AT

Process for the production of air-drying lacquer binders having average molecular weights ($Mn$) of from 1,000 to 20,000 and acid numbers (AN) of from 3 to 30 mg of KOH/g of substance by copolymerising

from 5.0 to 55.0%, by weight, of at least one glycidyl ester of an unsaturated carboxylic acid and from 95.0 to 45.0%, by weight, of at least one vinyl or vinylidene monomer or mixtures thereof,

and esterifying the copolymer to an acid number of from 3 to 30 mg of KOH/g of substance using from 18 to 72%, by weight, based on copolymer plus drying fatty acid, of at least one drying fatty acid and then reacting the product with from 0 to 3%, by weight, based on copolymer and drying fatty acid and dicarboxylic acid anhydride, of at least one dicarboxylic acid anhydride, characterised in that the glycidyl ester of the unsaturated carboxylic acid is fumaric or maleic acid bis-glycidyl ester or a mixture of these bis-glycidyl esters.

## Revendication
### pour les Etats contractants: BE, DE, FR, GB, IT, NL, SE

Agents liants séchant l'air pour vernis, de poids moléculaires moyens $\overline{M}_n$ de 1000 à 20 000 et d'indices d'acide $I_a$ de 3 à 30 mg de KOH/g de substance, de copolymères de motifs copolymérisés de

5,0 à 55,0% en poids d'au moins un ester glycidylique acide carboxylique insaturé et
95,0 à 45,0% en poids d'au moins un monomère vinylique ou vinylidénique ou leurs mélanges,

qui ont été estérifiés par 18 à 72% en poids d'au moins un acide siccatif calculé en copolymère plus acide gras siccatif, jusqu'à un indice d'acide de 3–30 mg de KOH/g de substance et que l'on fait ensuite réagir avec 0 à 3% en poids d'au moins un anhydride d'acide dicarboxylique par rapport au copolymère et à l'acide gras siccatif et à l'anhydride d'acide dicarboxylique, caractérisé en ce que l'ester glycidylique de l'acide carboxylique insaturé est un ester bisglycidylique d'acide fumarique ou d'acide maléique ou un mélange de ces esters bisglycidyliques.

## Revendication
### pour l'Etat contractant: AT

Procédé pour la préparation d'agents liants séchant l'air pour vernis, de poids moléculaires moyens $\overline{M}_n$ de 1000 à 20 000 et d'indices d'acide $I_a$ de 3 à 30 mg de KOH/g de substance, par copolymérisation de

5,0 à 55,0% en poids d'au moins un ester glycidylique acide carboxylique insaturé et
95,0 à 45,0% en poids d'au moins un monomère vinylique ou vinylidénique ou leurs mélanges

et estérification du copolymère, calculé en copolymère plus acides gras siccatifs, par 18 à 72% en poids d'au moins un acide siccatif jusqu'à un indice d'acide de 3–30 mg de KOH/g de substance et ensuite réaction, par rapport au copolymère et à l'acide gras siccatif et à l'anhydride d'acide dicarboxylique, avec 0 à 3% en poids d'au moins un anhydride d'acide dicarboxylique, caractérisé en ce que l'ester glycidylique de l'acide carboxylique insaturé est un ester bisglycidylique d'acide fumarique ou d'acide maléique ou un mélange de ces esters bisglycidyliques.